# EUROPÄISCHE PATENTSCHRIFT

(11) **EP 1 760 232 B1**
(45) Veröffentlichungstag und Bekanntmachung des Hinweises auf die Patenterteilung: **20.10.2010**
(21) Anmeldenummer: 06016623.8
(22) Anmeldetag: 09.08.2006
(51) Int. Cl.: E05B 67/28, E05B 47/06

(54) **Zweirad-Schloss**
Lock for bicycle
Serrure pour deux-roues

(30) Priorität: 31.08.2005 DE 102005041268
(43) Veröffentlichungstag der Anmeldung: 07.03.2007
(73) Patentinhaber: ABUS August Bremicker Söhne KG, 58300 Wetter-Volmarstein (DE)
(72) Erfinder: Becker, Dr. Thomas, D-65597 Hünfelden (DE)
(74) Vertreter: Manitz, Finsterwald & Partner GbR

(56) Entgegenhaltungen:
- EP-A- 0 402 537
- WO-A-00/61897
- JP-A- 2000 087 613
- JP-A- 2001 012 122
- US-B1- 6 792 779

## Beschreibung

Die Erfindung betrifft ein Zweirad-Schloss mit einem Bügel, einem Riegel, einer Vorspanneinrichtung zum Vorspannen des Riegels in Richtung einer Verriegelungsstellung, in der der Riegel den Bügel verriegelt, und mit einer Antriebseinrichtung.

Ein derartiges Schloss dient zum Sichern eines Zweirads gegen eine unbefugte Benutzung. Es sind Zweirad-Schlösser mit einer motorischen Antriebseinrichtung für den Verriegelungsmechanismus bekannt, wobei die Antriebseinrichtung den Bügel wahlweise in eine Schließstellung oder eine Öffnungsstellung verfährt. Da der Bügel eines Zweirad-Schlosses üblicherweise eine große Masse besitzt, müssen hierbei entsprechend hohe Trägheitskräfte überwunden werden, was sich nachteilig auf den Energieverbrauch auswirkt. Derartige Zweirad-Schlösser sind deshalb nur schlecht für die Verwendung einer autonomen Energiequelle (Batterie oder Akkumulator) geeignet.

Andere Zweirad-Schlösser, bei denen dieses Problem vermieden wird, indem die Antriebseinrichtung lediglich einen Riegel - und nicht den Bügel - antreibt, besitzen den Nachteil, dass in manchen Betriebszuständen eine unsachgemäße Betätigung des Bügels möglich ist.

Aus der WO 00/61897 A1 ist ein Zweirad-Schloss mit den Merkmalen des Oberbegriffs des Anspruchs 1 bekannt. Der Riegel wird hier mittels eines Elektromagneten bewegt.

Aus der JP 2001-012122 A ist ein Zweirad-Schloss mit Funkfernsteuerung bekannt, bei dem die Zeitdauer der Empfangsbereitschaft des Empfängers erhöht wird, sobald ein Identifizierungscode empfangen wird.

In der JP 2000-087613 A ist ein Zweirad-Schloss mit modularem Aufbau beschrieben, das sowohl eine automatische Entriegelung mittels eines elektrischen Aktuators aufgrund eines entsprechenden Funksteuerbefehls, als auch eine manuelle Entriegelung mittels eines Zylinderschlosses ermöglicht.

Es ist eine Aufgabe der Erfindung, ein Zweirad-Schloss mit einer Antriebseinrichtung zum Antreiben eines Riegels zu schaffen, das bei günstigem Energieverbrauch sichere Betriebszustände gewährleistet und hierdurch eine unsachgemäße Bedienung verhindert.

Diese Aufgabe wird durch ein Zweirad-Schloss mit den Merkmalen des Anspruchs 1 gelöst.

Bei dem Zweirad-Schloss ist der Verriegelungsmechanismus derart ausgebildet, dass eine motorische Antriebseinrichtung - beispielsweise ein Elektromotor - nicht direkt den Schlossbügel antreibt, sondern lediglich einen Riegel bewegt, der mit dem Bügel zusammenwirkt, um den Bügel in einer bestimmten Stellung zu verriegeln. Die Bewegung des Riegels mittels der Antriebseinrichtung erfolgt infolge eines von dem befugten Benutzer abgesetzten Entriegelungsbefehls, wobei die Bewegung des Bügels - sobald dieser entriegelt ist - durch den Benutzer manuell durchgeführt wird. Hierdurch ergibt sich ein günstiger Energieverbrauch, da die Masse des anzutreibenden Riegels im Vergleich zu der Masse des Bügels relativ gering ist.

Gleichwohl wird bei dem Zweirad-Schloss ein unbeabsichtigtes oder unbefugtes Verriegeln oder Bewegen des Bügels verhindert. Hierfür ist vorgesehen, dass die Antriebseinrichtung den Riegel lediglich für die Dauer eines begrenzten Zeitintervalls in der Entriegelungsstellung hält. Dieses Zeitintervall kann beispielsweise etwa eine Sekunde oder mehrere Sekunden dauern. Nach Ablauf dieses Zeitintervalls gibt die Antriebseinrichtung den Riegel wieder frei, so dass der Riegel mittels einer zugeordneten Vorspanneinrichtung zu diesem Zeitpunkt automatisch in Richtung der Verriegelungsstellung bewegt wird. Hierdurch ist sichergestellt, dass der Bügel entweder sofort wieder verriegelt ist oder dass aufgrund der Vorspannung des Riegels eine Verriegelung des Bügels zumindest sofort dann erfolgt, wenn der Bügel in eine Sicherungsstellung gebracht wird, in der der Riegel den Bügel zu verriegeln vermag. Letzteres erfolgt beispielsweise automatisch dann, wenn der Bügel mittels einer weiteren Vorspanneinrichtung in Richtung einer derartigen Sicherungsstellung vorgespannt ist und vom Benutzer in einer ungesicherten Stellung losgelassen wird.

Aufgrund der lediglich zeitlich begrenzten Entriegelung des Riegels mittels der Antriebseinrichtung können der Riegel und der Bügel also derart zusammenwirken, dass der Riegel den Bügel automatisch verriegelt, sobald der Bügel vom Benutzer oder aufgrund einer entsprechenden Vorspannung in eine Sicherungsstellung gebracht ist. Der Bügel ist dann in der betreffenden Stellung gegen eine unbeabsichtigte oder unbefugte Bewegung gesichert. Hierdurch kann beispielsweise verhindert werden, dass der Benutzer des Schlosses fälschlicherweise davon ausgeht, dass der Bügel ordnungsgemäß verriegelt ist, obwohl eine entsprechende Sicherungsstellung des Bügels noch nicht vollständig erreicht ist. Besonders wichtig ist diese Funktion jedoch auch, um zu verhindern, dass der Bügel ausgehend von einer Öffnungsstellung unbefugt in eine Schließstellung gebracht wird. Insbesondere ist es bei einem Rahmenschloss wichtig, dass der Bügel während der Fahrt nicht - beispielsweise von einem auf dem Zweirad mitgeführten Kind - unbeabsichtigt in die Schließstellung und somit zwischen die Speichen des Hinterrads bewegt wird. Die Erfindung gestattet somit die Verwirklichung einer wirksamen Kindersicherung für ein Zweirad-Schloss mit motorischer Antriebseinrichtung.

Erfindungsgemäß besitzt die Antriebseinrichtung eine Welle mit einem Steuerabschnitt - beispielsweise einem Exzenterabschnitt -, der mit dem Riegel zusammenwirkt, um den Riegel entgegen der Vorspannung in die Entriegelungsstellung zu bewegen. Hierdurch kann das erläuterte zeitlich begrenzte Zurückbewegen des Riegels in die Entriegelungsstellung auf besonders einfache Weise verwirklicht werden.

Vorzugsweise besitzt der Bügel wenigstens einen Verriegelungsabschnitt, mit dem der Riegel zusammenwirkt, um den Bügel in der vorgenannten Sicherungsstellung (z.B. Öffnungsstellung oder Schließstellung) zu verriegeln. Bei diesem Verriegelungsabschnitt kann es sich insbesondere um eine Eingriffsvertiefung - beispielsweise eine Kerbe des Bügels - handeln, in die der Riegel in seiner Verriegelungsstellung eingreift.

Es ist bevorzugt, wenn der Bügel zumindest zwei derartige Verriegelungsabschnitte aufweist, nämlich einen ersten Verriegelungsabschnitt, mit dem der Riegel zusammenwirkt, um den Bügel in einer Öffnungsstellung zu verriegeln, und einen zweiten Verriegelungsabschnitt, mit dem der Riegel zusammenwirkt, um den Bügel in einer Schließstellung zu verriegeln. Somit wird der Bügel sowohl in der Schließstellung als auch in der Öffnungsstellung mittels des Riegels gegen eine unbefugte Bewegung gesichert.

Weiterhin ist es bevorzugt, wenn der Bügel in Richtung der genannten Öffnungsstellung vorgespannt ist. In diesem Fall muss der Benutzer den Bügel also entgegen der Vorspannung bewegen, um den Bügel in die Schließstellung zu bringen, während das Rückholen des Bügels aus der Schließstellung in die Öffnungsstellung ohne zusätzliche manuelle Betätigung erfolgen kann. Hierdurch ist also gewährleistet, dass der Bügel aufgrund der Vorspannung automatisch in die Öffnungsstellung bewegt und dort von dem Riegel gesichert wird, sobald der Bügel aus der Schließstellung freigegeben ist und von dem Benutzer nicht oder nicht mehr gehalten wird.

Weiterhin ist es von Vorteil, wenn die Antriebseinrichtung eine Welle mit einem Steuerabschnitt - beispielsweise einem weiteren Exzenterabschnitt - besitzt, der mit einem Schalter zusammenwirkt, um die Drehstellung der Welle zu detektieren. Hierdurch ist eine besonders einfache Steuerung der Antriebseinrichtung möglich. Als Schalter kann beispielsweise ein Kontaktschalter oder ein Näherungsschalter vorgesehen sein, insbesondere ein kapazitiver, induktiver oder magnetischer Näherungsschalter.

Gemäß einer vorteilhaften Weiterbildung des erfindungsgemäßen Zweirad-Schlosses besitzt dieses eine Blockiereinrichtung, mittels derer der Riegel - wenn dieser sich in der Verriegelungsstellung befindet - gegen eine Bewegung in Richtung der Entriegelungsstellung blockiert wird. Die Antriebseinrichtung besitzt in diesem Fall vorzugsweise eine Welle mit einem Steuerabschnitt, durch den die genannte Blockiereinrichtung in eine Freigabestellung bewegt werden kann, um den Riegel für eine nachfolgende Bewegung in Richtung der Entriegelungsstellung freizugeben. Mittels einer derartigen Blockiereinrichtung kann ein unbefugtes kurzzeitiges Entriegeln des Bügels nach der sogenannten "Hammerschlagmethode" verhindert werden. Mit anderen Worten kann auch durch einen Schlag auf das Schloss nicht erreicht werden, dass der Riegel entgegen seiner Vorspannung sich kurzzeitig in Richtung seiner Entriegelungsstellung bewegt. Sobald jedoch infolge eines Entriegelungsbefehls des befugten Benutzers der Riegel mittels der Antriebseinrichtung in die Entriegelungsstellung bewegt werden soll, wird die Blockiereinrichtung zuvor in die Freigabestellung bewegt, um die befugte Entriegelungsbewegung zu ermöglichen.

Hinsichtlich dieser Weiterbildung ist es von Vorteil, wenn die Blockiereinrichtung in Richtung einer Blockierstellung, in der sie den Riegel in der erläuterten Weise blockiert, vorgespannt ist. Hierdurch ist nämlich gewährleistet, dass das erwünschte Blockieren des Riegels stets automatisch sofort dann erfolgt, wenn der Riegel in die Verriegelungsstellung bewegt worden ist.

Der im Zusammenhang mit der Blockiereinrichtung genannte Steuerabschnitt der Welle kann durch eine schräge Fläche gebildet sein, die mit einem Zwangsführungsabschnitt der Blockiereinrichtung zusammenwirkt. Hierdurch ist ein besonders einfacher Antrieb der Blockiereinrichtung möglich.

Weiterhin ist es bevorzugt, wenn die Antriebseinrichtung mit einer Steuerschaltung verbunden ist, die die Antriebseinrichtung derart ansteuert, dass die vorgenannte Welle infolge jedes Entriegelungsbefehls sich jeweils stets um genau eine volle Umdrehung dreht. Hierdurch können die erläuterten Steuerfunktionen besonders einfach verwirklicht werden.

Schließlich ist es auch bevorzugt, wenn ein Entriegelungsbefehl an den Verriegelungsmechanismus des Zweirad-Schlosses drahtlos übertragen werden kann. Hierfür kann die genannte Steuerschaltung mit einem Funkempfänger oder einem optischen Empfänger (z.B. Infrarot) verbunden sein, mittels dessen ein entsprechendes codiertes Funksignal bzw. codiertes optisches Signal empfangen werden kann.

Weitere Ausführungsformen sind in den Unteransprüchen genannt.

Die Erfindung wird nachfolgend lediglich beispielhaft unter Bezugnahme auf die Zeichnungen erläutert.
- Fig. 1a und 1 b: zeigen ein Rahmenschloss mit unterschiedlicher Stellung des Riegels und des Bügels.
- Fig. 2a bis 2c: zeigen den Riegel des Rahmenschlosses gemäß Fig. 1a und 1b in unterschiedlichen Stellungen in einer jeweiligen Detailansicht.
- Fig. 3a und 3b: zeigen Querschnittsansichten der Welle gemäß Fig. 2a entlang der Ebene IIIa-IIIa bzw. entlang der Ebene IIIb-IIIb.
- Fig. 4 und 5: zeigen eine jeweilige Perspektivansicht der Welle bzw. der Blockiereinrichtung des Rahmenschlosses.

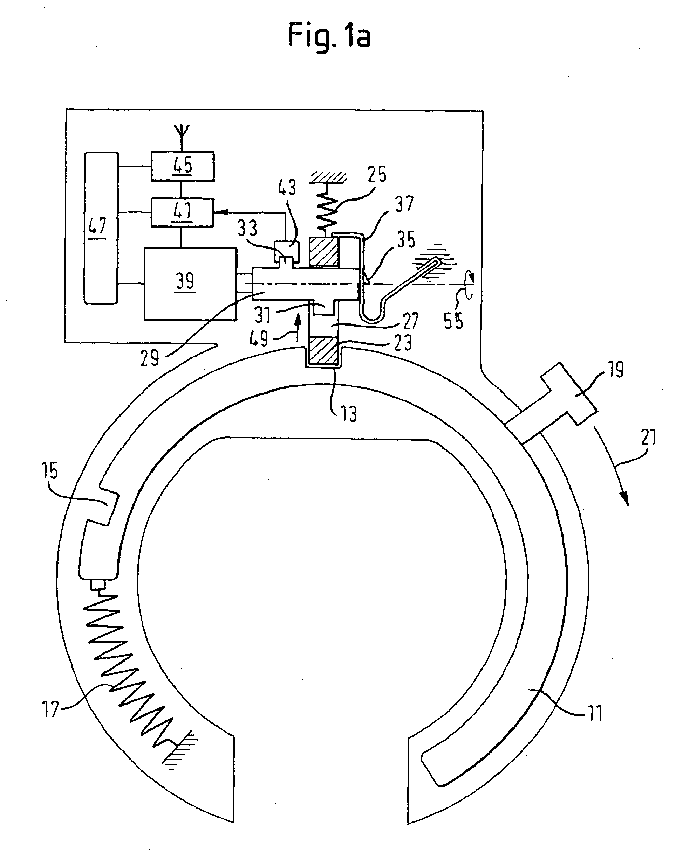

Fig. 1a zeigt schematisch den Aufbau eines erfindungsgemäßen Rahmenschlosses zur Montage an den Hinterradstreben eines Fahrrads. Das Rahmenschloss besitzt einen Rundbügel 11 zum Umgreifen des Hinterrads. Der Rundbügel 11 besitzt eine erste Eingriffsvertiefung 13 und eine zweite Eingriffsvertiefung 15, und er ist mittels einer Zugfeder 17 in Richtung einer in Fig. 1a gezeigten Öffnungsstellung vorgespannt. Solange der Rundbügel 11 nicht verriegelt ist, kann er mittels einer Handhabe 19 entgegen der Vorspannung entlang einer Schließrichtung 21 in Richtung einer Schließstellung gedreht werden.

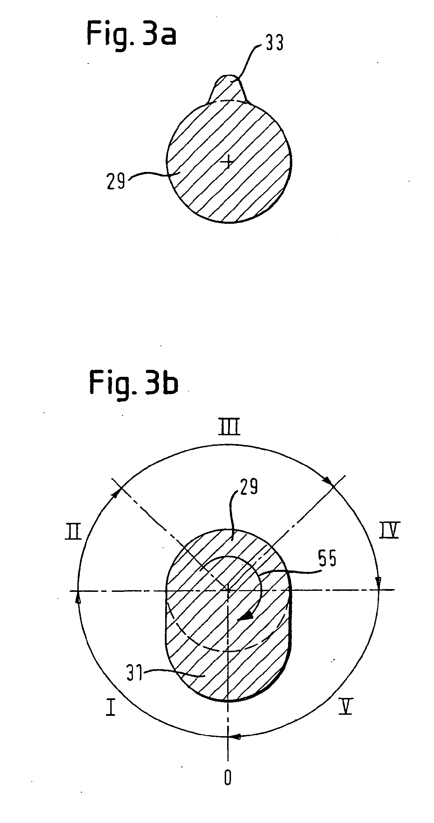

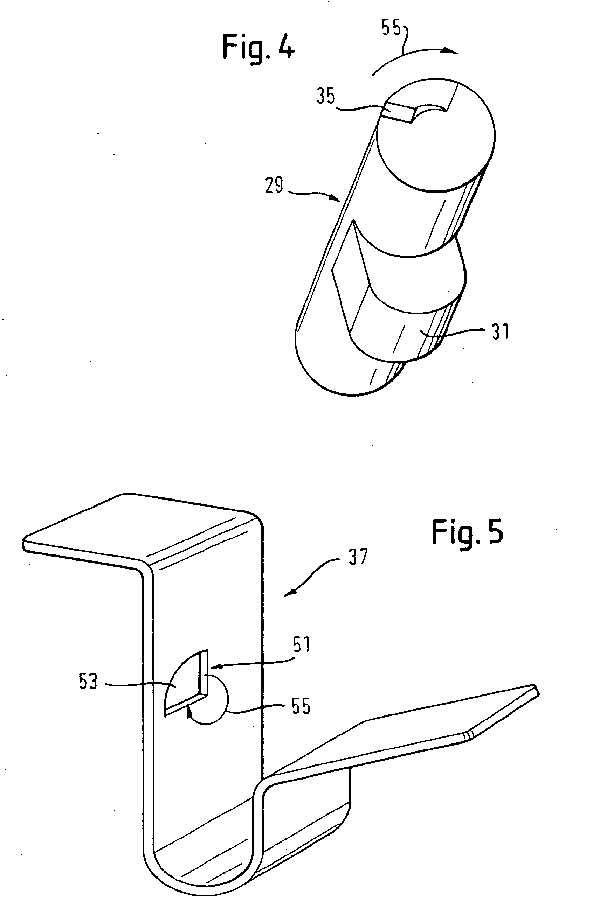

Mit dem Rundbügel 11 wirkt ein Riegel 23 zusammen, der von einer Druckfeder 25 in Richtung einer in Fig. 1a gezeigten Verriegelungsstellung vorgespannt wird. Der Riegel 23 besitzt eine zentrale Ausnehmung 27. In diese greift eine Welle 29 ein, die im Bereich des Riegels 23 einen Entriegelungsnocken 31 besitzt (vgl. auch Querschnittsansicht gemäß Fig. 3b sowie Fig. 4). An einem anderen Längsabschnitt besitzt die Welle 29 einen Schaltnocken 33 (vgl. auch Querschnittsansicht gemäß Fig. 3a). Die Vorderseite der Welle 29 ist als eine exzentrisch angeordnete schräge Fläche in Form einer Freigabenase 35 ausgebildet (vgl. auch Fig. 4). Diese wirkt mit einer Blockierfeder 37 zusammen, wie nachfolgend noch erläutert wird.

Als Antriebseinrichtung für die Welle 29 ist ein Elektromotor 39 vorgesehen, der vorzugsweise ein integriertes oder aufgesetztes Getriebe für eine Übersetzung ins Langsame besitzt (nicht gezeigt). Der Elektromotor 39 wird von einer Steuerschaltung 41 angesteuert. Diese ist eingangsseitig mit einem Kontaktschalter 43 verbunden, der mit dem Schaltnocken 33 der Welle 29 zusammenwirkt. Ferner ist die Steuerschaltung 41 eingangsseitig mit einem Funkempfänger 45 verbunden. Eine Batterie 47 (oder Akkumulator) dient zur Energieversorgung des Elektromotors 39, der Steuerschaltung 41 und des Funkempfängers 45.

Das in Fig. 1a gezeigte Rahmenschloss dient zum Sichern des zugehörigen Fahrrads gegen eine unbefugte Benutzung. Hierfür kann der Rundbügel 11 ausgehend von der gezeigten Öffnungsstellung in eine Schließstellung gebracht werden, in der der Rundbügel in einen Zwischenraum zwischen zwei benachbarten Speichen des Hinterrads eingreift und das Hinterrad hierdurch blockiert.

Der Rundbügel 11 kann sowohl in der gezeigten Öffnungsstellung als auch in der genannten Schließstellung mittels des Riegels 23 verriegelt werden. Hierfür drängt die Druckfeder 25 den Riegel 23 in Richtung des Rundbügels 11. Solange die Welle 29 mit dem Entriegelungsnocken 31 den Riegel 23 hierfür freigibt, liegt der Riegel 23 deshalb an der Oberseite des Rundbügels 11 an oder greift in eine der beiden Eingriffsvertiefungen 13, 15 ein, falls diese sich auf Höhe des Riegels 23 befinden. Wenn der Riegel 23 in die erste Eingriffsvertiefung 13 eingreift, ist der Rundbügel 11 in der Öffnungsstellung gesichert, wie in Fig. 1a gezeigt ist. Falls hingegen der Riegel 23 in die zweite Eingriffsvertiefung 15 eingreift, so entspricht dies der genannten Schließstellung des Rundbügels 11.

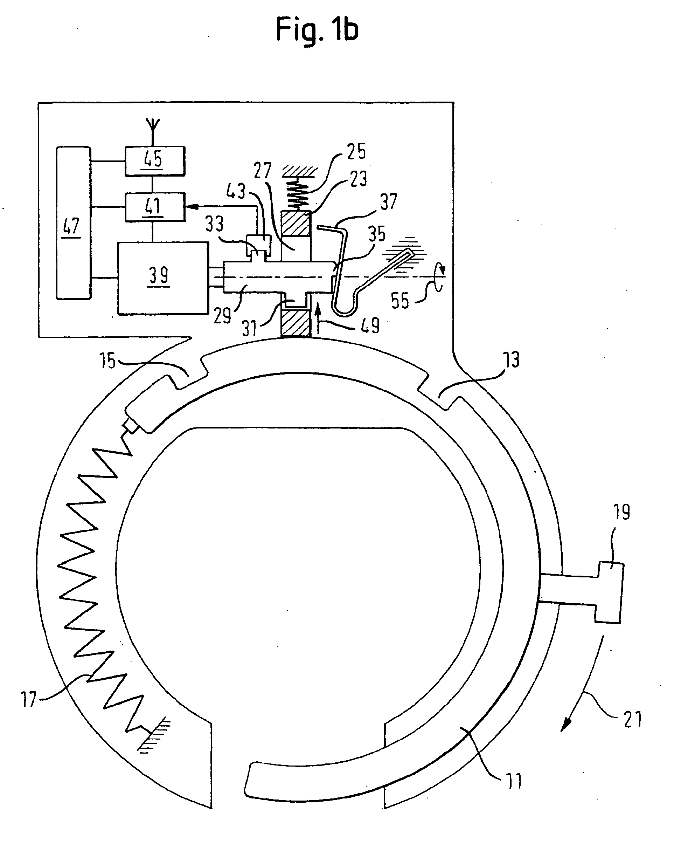

Durch Drehen der Welle 29 kann der Riegel 23 mittels des Entriegelungsnockens 31 kurzzeitig entlang einer Entriegelungsrichtung 49 entgegen der Vorspannung durch die Druckfeder 25 in eine Entriegelungsstellung gebracht werden. In dieser Entriegelungsstellung ist der Rundbügel 11 für eine Drehbewegung freigegeben. Insbesondere kann der Benutzer ausgehend von der Öffnungsstellung gemäß Fig. 1a den Rundbügel 11 mittels der Handhabe 19 entlang der Schließrichtung 21 bewegen, um den Rundbügel 11 letztlich in die bereits erläuterte Schließstellung zu überführen. Fig. 1b zeigt das Rahmenschloss während einer derartigen Bewegung des Rundbügels 11 in Schließrichtung 21. Falls zu diesem Zeitpunkt der Entriegelungsnocken 31 der Welle 29 den Riegel 23 bereits wieder freigibt und die Druckfeder 25 den Riegel 23 somit erneut in Richtung des Rundbügels 11 drängt, so beeinträchtigt dies nicht die weitere Schließbewegung des Rundbügels 11. Wie in Fig. 1b gezeigt ist, liegt der Riegel 23 nämlich lediglich so lange an der Oberseite des Rundbügels 11 an, bis die zweite Eingriffsvertiefung 15 sich auf Höhe des Riegels 23 befindet. Sodann kann der Riegel 23 in die zweite Eingriffsvertiefung 15 einschnappen, um den Rundbügel 11 in der somit erreichten Schließstellung zu sichern.

Aus Fig. 1b ist auch die folgende Eigenschaft des gezeigten Rahmenschlosses ersichtlich: Falls der Benutzer während der Schließbewegung des Rundbügels 11 - also während der Riegel 23 sich zwischen der ersten Eingriffsvertiefung 13 und der zweiten Eingriffsvertiefung 15 befindet - die Schließbetätigung nicht vollendet und der Riegel 23 somit nicht in Eingriff mit der zweiten Eingriffsvertiefung 15 gelangt, so zieht die Zugfeder 17 den Rundbügel 11 wieder zurück in die in Fig. 1a gezeigte Öffnungsstellung, wobei der Riegel 23 aufgrund seiner Vorspannung sodann in die erste Eingriffsvertiefung 13 schnappt (vgl. Fig. 1a). Der Rundbügel 11 ist hierdurch auch in diesen Fall gegen eine unbefugte oder unbeabsichtigte nachfolgende Schließbetätigung gesichert. Gleiches gilt auch für den Fall, dass in der in Fig. 1a gezeigten Öffnungsstellung des Rundbügels 11 der Riegel 23 infolge eines vom Benutzer abgesetzten Entriegelungsbefehls zwar kurzzeitig entriegelt wird, der Rundbügel 11 während dieses Zeitintervalls jedoch überhaupt nicht in Schließrichtung 21 gedreht wird. In diesem Fall verbleibt der Rundbügel 11 also in der Öffnungsstellung, und der Riegel 23 greift sofort wieder in die erste Eingriffsvertiefung 13 ein, sobald der Riegel 23 aufgrund einer entsprechenden Drehbewegung der Welle 29 hierfür freigegeben worden ist.

Eine weitere Besonderheit des gezeigten Rahmenschlosses liegt in der Blockierfeder 37. Solange der Riegel 23 sich - wie in Fig. 1a gezeigt - in der Verriegelungsstellung befindet, hintergreift die Blockierfeder 37 den Riegel 23. Dies gilt sowohl für die in Fig. 1a gezeigte Öffnungsstellung als auch für die erläuterte Schließstellung des Rundbügels 11. Solange die Blockierfeder 37 den Riegel 23 derartig hintergreift, ist dieser gegen eine unbefugte Entriegelungsbewegung nach der sogenannten "Hammerschlagmethode" gesichert. Um den Riegel 23 für eine (befugte) Bewegung in der Entriegelungsrichtung 49 freizugeben, wird die Blockierfeder 37 entgegen der von ihr ausgeübten Vorspannung kurzzeitig zurückgedrängt, um das freie Ende der Blockierfeder 37 außer Eingriff mit dem Riegel 23 zu bringen. Hierfür greift die Freigabenase 35 der Welle 29 an einer Zwangsführungsfläche 51 der Blockierfeder 37 an, die eine Blockieraussparung 53 der Blockierfeder 37 umgibt (vgl. Fig. 5). Sobald die Freigabenase 35 jedoch in die Blockieraussparung 53 eingreift, kann die Blockierfeder 37 aufgrund ihrer Vorspannung den Riegel 23 in der erläuterten Weise hintergreifen (vgl. Fig. 1a).

In dem Zustand gemäß Fig. 1b liegt die Blockierfeder 37 übrigens noch seitlich an dem Riegel 23 an. Sobald jedoch der Riegel 23 sich wieder vollständig die Verriegelungsstellung begibt, schnappt die Blockierfeder 37 in die in Fig. 1a gezeigte Blockierstellung und hintergreift den Riegel 23 wieder.

Die Blockierfeder 37 kann auch mehrteilig ausgeführt sein, beispielsweise als Blockierriegel, der von einer separaten Druckfeder vorgespannt wird.

Die Steuerung der erläuterten Verriegelungs- und Entriegelungsbewegung des Riegels 23 sowie der erläuterten Blockier- und Freigabebewegung der Blockierfeder 37 erfolgt auf sehr einfache Weise mittels der Steuerschaltung 41:

Sobald der Benutzer mittels eines zugeordneten Funksenders (nicht gezeigt) einen Entriegelungsbefehl in Form eines codierten Funksignals absetzt und dieser von dem Funkempfänger 45 empfangen wird, wandelt der Funkempfänger 45 den Entriegelungsbefehl in ein entsprechendes elektrisches Signal um und übermittelt dieses an die Steuerschaltung 41. Die Steuerschaltung 41 steuert den Elektromotor 39 infolgedessen derart an, dass die Welle 29 genau eine volle Umdrehung um ihre Achse vollzieht. Das exakte Durchführen einer einzigen vollständigen Umdrehung der Welle 29 ist durch das Zusammenwirken des Schaltnockens 33 mit dem Kontaktschalter 43 gewährleistet, d.h. die Steuerschaltung 41 veranlasst den Elektromotor 39 so lange zu einem Drehantrieb der Welle 29, bis der Schaltnocken 33 den Kontaktschalter 43 erneut betätigt. Während einer Umdrehung der Welle 29 wird zunächst die Blockierfeder 37 in die Freigabestellung zurückgedrängt, sodann wird der Riegel 23 für die Dauer eines begrenzten Zeitintervalls in die Entriegelungsstellung gebracht und anschließend wieder für eine Bewegung entgegen der Entriegelungsrichtung 49 freigegeben, und schließlich wird auch die Blockierfeder 37 wieder für eine Bewegung in Richtung des Riegels 23 freigegeben.

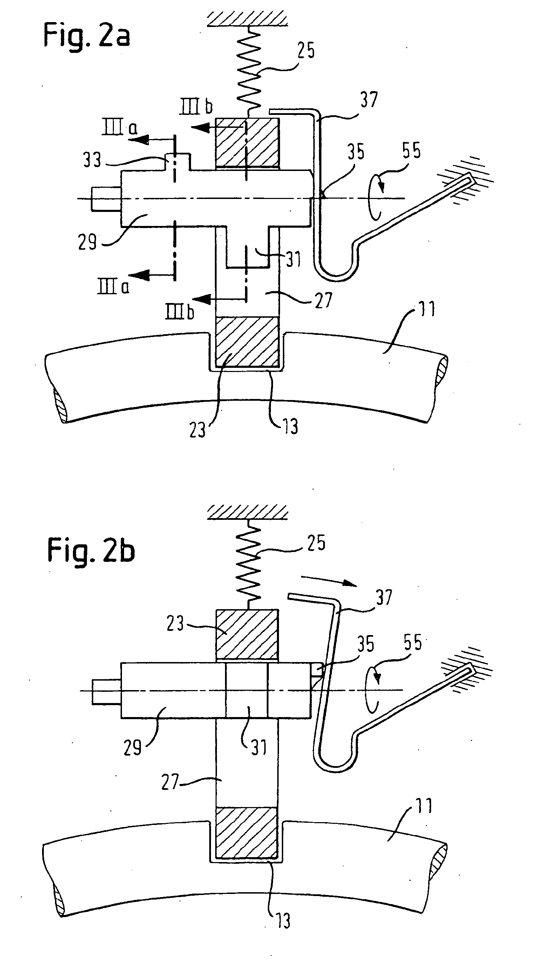

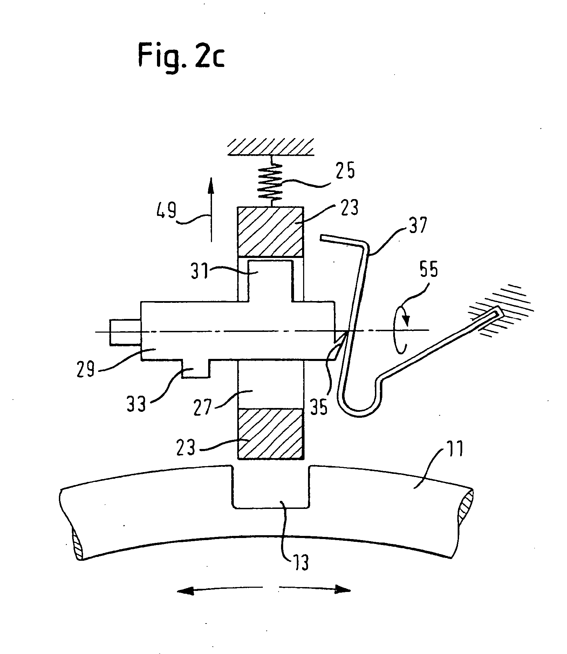

Nachfolgend werden die einzelnen Phasen des Steuerablaufs zum kurzzeitigen Entriegeln des Riegels 23 im Einzelnen erläutert, wobei insbesondere auf die verschiedenen Winkelbereiche I bis V der Ausrichtung des Entriegelungsnockens 31 gemäß Fig. 3b Bezug genommen wird:
(0) In der Ausgangslage befindet sich der Riegel 23 in der Verriegelungsstellung und greift aufgrund der Vorspannung durch die Druckfeder 25 in die Eingriffsvertiefung 13 (oder 15) ein. Der Riegel 23 wird von der Blockierfeder 37 hintergriffen, wobei die Freigabenase 35 der Welle 29 in die Blockieraussparung 53 der Blockierfeder 37 eingreift. Der Schaltnocken 33 zeigt nach oben und betätigt den Kontaktschalter 43. Der Entriegelungsnocken 31 zeigt nach unten und liegt frei in der Ausnehmung 27. Diese Ausgangslage ist in Fig. 1a und 2a gezeigt.
(I) Wenn nun die Welle 29 von dem Elektromotor 39 zu einer Drehbewegung angetrieben wird (Drehrichtung 55), führt dies zunächst dazu, dass die Freigabenase 35 der Welle 29 mit der Begrenzung zwischen der Blockieraussparung 53 und der Zwangsführungsfläche 51 der Blockierfeder 37 zusammenwirkt und die Blockierfeder 37 hierdurch allmählich in Richtung ihrer Freigabestellung zurückdrängt (vgl. Fig. 2b). Der Entriegelungsnocken 31 dreht zu diesem Zeitpunkt immer noch frei, d.h. es erfolgt noch keine Bewegung des Riegels 23.
(II) Bei Fortsetzung dieser Drehbewegung der Welle 29 drängt die Freigabenase 35 die Blockierfeder 37 vollständig in die Freigabestellung zurück, und der Entriegelungsnocken 31 greift nun an dem Riegel 23 an, um diesen entgegen der Vorspannung entlang der Entriegelungsrichtung 49 zu bewegen. Der Riegel 23 wird somit außer Eingriff mit der betreffenden Eingriffsvertiefung 13 bzw. 15 des Rundbügels 11 gebracht (vgl. Fig. 2c). Der Rundbügel 11 kann nun in oder entgegen der Schließrichtung 21 gedreht werden.
(III) Im weiteren Verlauf der Drehbewegung der Welle 29 wird der Riegel 23 in der in Fig. 2c gezeigten Entriegelungsstellung gehalten, und auch die Blockierfeder 37 bleibt in die Freigabestellung zurückgedrängt. Hierdurch ist ein vorbestimmtes Zeitintervall gegeben, während dessen der Benutzer den Rundbügel 11 ausgehend von der in Fig. 2c gezeigten Stellung bewegen kann.
(IV) Die weitere Drehbewegung der Welle 29 führt dazu, dass der Entriegelungsnocken 31 den Riegel 23 allmählich wieder für eine Bewegung entgegen der Entriegelungsrichtung 49 freigibt. Aufgrund der Vorspannung durch die Druckfeder 25 kann der Riegel 23 sich also wieder in Richtung des Rundbügels 11 bewegen.
(V) Schließlich erreicht die exzentrisch angeordnete Freigabenase 35 der Welle 29 wieder die Blockieraussparung 53 der Blockierfeder 37, so dass die Freigabenase 35 in die Blockieraussparung 53 zurückschnappen kann und die vorgespannte Blockierfeder 37 sich wieder in Richtung des Riegels 23 bewegt. Am Ende dieser Phase erreicht der Schaltnocken 33 wieder den Kontaktschalter 43, und die Steuerschaltung 41 schaltet den Elektromotor 39 so lange ab, bis über den Funkempfänger 45 der nächste Entriegelungsbefehl erhalten wird. Die Anordnung befindet sich nun also wieder in der genannten Ausgangsstellung.

Ein besonderer Vorteil des gezeigten Rahmenschlosses besteht darin, dass ein elektromotorisches Entriegeln des Rundbügels 11 möglich ist und der Rundbügel 11 dennoch sowohl in der Öffnungsstellung (Fig. 1a) als auch in der Schließstellung gegen eine unbefugte Betätigung sicher verriegelt ist. Hierdurch ist insbesondere ausgeschlossen, dass der Riegel 23 - beispielsweise durch eine unabsichtliche Betätigung des zugeordneten Fernsteuersenders - in der Öffnungsstellung des Rundbügels 11 dauerhaft in die Entriegelungsstellung gemäß Fig. 2c gebracht wird und der Rundbügel 11 deshalb während der Fahrt versehentlich in Richtung 21 der Schließstellung bewegt werden kann. Stattdessen ist es - um den Rundbügel 11 von der Öffnungsstellung in die Schließstellung zu bringen - stets erforderlich, zwei Aktionen synchronisiert durchzuführen, nämlich das Absetzen des Entriegelungsbefehls und das zeitnahe manuelle Betätigen des Rundbügels 11 mittels der Handhabe 19. Sofern der Rundbügel 11 sich in einer Zwischenstellung zwischen der Öffnungsstellung und der Schließstellung befindet, sorgt die Zugfeder 17 dafür, dass der Rundbügel 11 automatisch in die Öffnungsstellung gemäß Fig. 1a gebracht wird, wobei der Riegel 23 aufgrund seiner Vorspannung den Rundbügel 11 sofort verriegelt. Ein weiterer Vorteil der Anordnung besteht in der günstigen Energieeffizienz, da der Elektromotor 39 letztlich lediglich den Riegel 23 entgegen der Vorspannung durch die Druckfeder 25 und die Blockierfeder 37 entgegen ihrer Vorspannung bewegen muss, es muss jedoch nicht der Rundbügel 11 selbst angetrieben werden.

Anstelle des gezeigten Rahmenschlosses kann die Erfindung auch für andere Arten von Zweirad-Schlössern mit Bügel verwirklicht sein.

### Bezugszeichenliste

- 11: Rundbügel
- 13: erste Eingriffsvertiefung
- 15: zweite Eingriffsvertiefung
- 17: Zugfeder
- 19: Handhabe
- 21: Schließrichtung
- 23: Riegel
- 25: Druckfeder
- 27: Ausnehmung
- 29: Welle
- 31: Entriegelungsnocken
- 33: Schaltnocken
- 35: Freigabenase
- 37: Blockierfeder
- 39: Elektromotor
- 41: Steuerschaltung
- 43: Kontaktschalter
- 45: Funkempfänger
- 47: Batterie
- 49: Entriegelungsrichtung
- 51: Zwangsführungsfläche
- 53: Blockieraussparung
- 55: Drehrichtung

## Patentansprüche

1. Zweirad-Schloss mit:
- einem Bügel (11),
- einem Riegel (23),
- einer Vorspanneinrichtung (25) zum Vorspannen des Riegels in Richtung einer Verriegelungsstellung, in der der Riegel den Bügel verriegelt, und
- einer Antriebseinrichtung (39),
wobei der Riegel (23) mittels der Antriebseinrichtung (39) dergestalt für die Dauer eines vorbestimmten Zeitintervalls in eine Entriegelungsstellung bewegbar ist, dass der Riegel mittels der Vorspanneinrichtung (25) nach Ablauf des vorbestimmten Zeitintervalls automatisch wieder in Richtung der Verriegelungsstellung bewegbar ist, **dadurch gekennzeichnet,**
**dass** die Antriebseinrichtung (39) eine Welle (29) mit einem Steuerabschnitt (31) aufweist, der mit dem Riegel (23) zusammenwirkt, um den Riegel entgegen der Vorspannung in die Entriegelungsstellung zu bewegen.

2. Schloss nach Anspruch 1,
**dadurch gekennzeichnet,**
**dass** der Bügel (11) wenigstens einen Verriegelungsabschnitt (13, 15) aufweist, mit dem der Riegel (23) zusammenwirkt, um den Bügel zu verriegeln.

3. Schloss nach Anspruch 2,
**dadurch gekennzeichnet,**
**dass** der Verriegelungsabschnitt (13, 15) des Bügels durch eine Eingriffsvertiefung gebildet ist.

4. Schloss nach einem der vorhergehenden Ansprüche,
**dadurch gekennzeichnet,**
**dass** der Bügel (11) einen ersten Verriegelungsabschnitt (13) aufweist, mit dem der Riegel (23) zusammenwirkt, um den Bügel in einer Öffnungsstellung zu verriegeln, und dass der Bügel einen zweiten Verriegelungsabschnitt (15) aufweist, mit dem der Riegel zusammenwirkt, um den Bügel in einer Schließstellung zu verriegeln.

5. Schloss nach einem der vorhergehenden Ansprüche,
**dadurch gekennzeichnet,**
**dass** der Bügel (11) in Richtung einer Öffnungsstellung vorgespannt ist.

6. Schloss nach einem der vorhergehenden Ansprüche,
**dadurch gekennzeichnet,**
**dass** die Welle (29) einen Steuerabschnitt (33) aufweist, der mit einem Schalter (43) zusammenwirkt, um die Drehstellung der Welle zu detektieren.

7. Schloss nach einem der vorhergehenden Ansprüche,
**dadurch gekennzeichnet,**
**dass** eine Blockiereinrichtung (37) vorgesehen ist, mittels derer der Riegel (23) - wenn der Riegel sich in der Verriegelungsstellung befindet - gegen eine Bewegung in Richtung der Entriegelungsstellung blockierbar ist, wobei die Welle (29) einen Steuerabschnitt (35) aufweist, mittels dessen die Blockiereinrichtung (37) in eine Freigabestellung bewegbar ist, um den Riegel für eine nachfolgende Bewegung in Richtung der Entriegelungsstellung freizugeben.

8. Schloss nach Anspruch 7,
**dadurch gekennzeichnet,**
**dass** die Blockiereinrichtung (37) in Richtung einer Blockierstellung vorgespannt ist.

9. Schloss nach einem der Ansprüche 7 oder 8,
**dadurch gekennzeichnet,**
**dass** der Steuerabschnitt (35) durch eine schräge Fläche der Welle (29) gebildet ist, die mit einem Zwangsführungsabschnitt (51) der Blockiereinrichtung (37) zusammenwirkt.

10. Schloss nach einem der vorhergehenden Ansprüche,
**dadurch gekennzeichnet,**
**dass** die Antriebseinrichtung (39) mit einer Steuerschaltung (41) verbunden ist, mittels derer die Antriebseinrichtung zum Antreiben der Welle (29) um jeweils eine volle Umdrehung ansteuerbar ist.

11. Schloss nach einem der vorhergehenden Ansprüche,
**dadurch gekennzeichnet,**
**dass** ein Funk- oder optischer Empfänger (45) zum Empfangen eines Entriegelungsbefehls vorgesehen ist.

12. Schloss nach einem der vorhergehenden Ansprüche,
**dadurch gekennzeichnet,**
**dass** es sich bei dem Zweirad-Schloss um ein Rahmenschloss handelt, wobei der Bügel (11) als ein Rundbügel ausgebildet ist.

## Claims

1. A lock for two-wheelers comprising:
- a hoop (11);
- a latch (23);
- a preloading device (25) for the preloading of the latch in the direction of a locked position in which the latch locks the hoop; and
a drive device (39),
wherein the latch (23) is movable into an unlocked position for the duration of a predetermined time interval by means of the drive device (39) such that the latch can automatically be moved back in the direction of the locked position by means of the preloading device (25) after the elapse of the predetermined time interval, **characterised in that**
the drive device (39) has a shaft (29) with a cam section (31) which cooperates with the latch (23) to move the latch into the unlocked position against the preload.

2. A lock in accordance with claim 1, **characterised in hat** the hoop (11) has at least one latching section (13, 15) with which the latch (23) cooperates to lock the hoop.

3. A lock in accordance with claim 2, **characterised in that** the latching section (13, 15) of the hoop is formed by an engagement cut-out.

4. A lock in accordance with any one of the preceding claims, **characterised in that** the hoop (11) has a first latching section (13) with which the latch (23) cooperates to lock the hoop in an open position; and **in that** the hoop has a second latching section (15) with which the latch cooperates to lock the hoop in a closed position.

5. A lock in accordance with any one of the preceding claims, **characterised in that** the hoop (11) is preloaded in the direction of an open position.

6. A lock in accordance with any one of the preceding claims, **characterised in that** the shaft (29) has a cam section (33) which cooperates with a switch (43) to detect the rotary position of the shaft.

7. A lock in accordance with any one of the preceding claims, **characterised in that** a blocking device (37) is provided by means of which the latch (23) can be blocked against a movement in the direction of the unlocked position - when the latch is in the locked position - with the shaft (29) having a cam section (35) by means of which the blocking device (37) can be moved into a release position to release the latch for a subsequent movement in the direction of the unlocked position.

8. A lock in accordance with claim 7, **characterised in that** the blocking device (37) is preloaded in the direction of a blocked position.

9. A lock in accordance with one of the claims 7 or 8, **characterised in that** the cam section (35) is formed by a slanted surface of the shaft (29) which cooperates with a compulsory guidance section (51) of the blocking device (37).

10. A lock in accordance with any one of the preceding claims, **characterised in that** the drive device (39) is connected to a control circuit (41) by means of which the drive device for the driving of the shaft (29) can be controlled by a complete revolution in each case.

11. A lock in accordance with any one of the preceding claims, **characterised in that** a radio receiver or optical receiver (45) is provided for the reception of an unlocking command.

12. A lock in accordance with any one of the preceding claims, **characterised in that** the lock for a two-wheeler is a frame lock, with the hoop (11) being made as a round hoop.

## Revendications

1. Cadenas pour deux-roues, comprenant :
- un arceau (11),
- un verrou (23),
- un moyen de précontrainte (25) pour précontraindre le verrou en direction d'une position de verrouillage dans laquelle le verrou verrouille l'arceau, et
- un moyen d'entraînement (39),
dans lequel le verrou (23) est déplaçable à l'aide du moyen d'entraînement (39) pour la durée d'un intervalle temporel prédéterminé jusque dans une position de déverrouillage de telle façon que le verrou est automatiquement à nouveau déplaçable en direction de la position de verrouillage à l'aide du moyen de précontrainte (25) après écoulement de l'intervalle temporel prédéterminé,
**caractérisé en ce que**
le moyen d'entraînement (39) comprend un arbre (29) avec un tronçon de commande (31) qui coopère avec le verrou (23) afin de déplacer le verrou jusque dans la position de déverrouillage à l'encontre de la précontrainte.

2. Cadenas selon la revendication 1,
**caractérisé en ce que** l'arceau (11) comprend au moins un tronçon de verrouillage (13, 15) avec lequel coopère le verrou (23) afin de verrouiller l'arceau.

3. Cadenas selon la revendication 2,
**caractérisé en ce que** le tronçon de verrouillage (13, 15) de l'arceau est formé par un renfoncement d'engagement.

4. Cadenas selon l'une des revendications précédentes,
**caractérisé en ce que** l'arceau comprend un premier tronçon de verrouillage (13) avec lequel coopère le verrou (23) afin de verrouiller l'arceau dans une position ouverte, et **en ce que** l'arceau comprend un second tronçon de verrouillage (15) avec lequel coopère le verrou afin de verrouiller l'arceau dans une position fermée.

5. Cadenas selon l'une des revendications précédentes,
**caractérisé en ce que** l'arceau (11) est précontraint en direction d'une position ouverte.

6. Cadenas selon l'une des revendications précédentes,
**caractérisé en ce que** l'arbre (29) comprend un tronçon de commande (33) qui coopère avec un commutateur (43) afin de détecter la position en rotation de l'arbre.

7. Cadenas selon l'une des revendications précédentes,
**caractérisé en ce qu'**il est prévu un moyen de blocage (37) au moyen duquel le verrou (23) - quand le verrou se trouve dans la position de verrouillage - est susceptible d'être bloqué à l'encontre d'un déplacement en direction de la position déverrouillée, dans lequel l'arbre (29) comprend un tronçon de commande (35) à l'aide duquel le moyen de blocage (37) est déplaçable jusque dans une position de libération afin de libérer le verrou pour un mouvement successif en direction de la position déverrouillée.

8. Cadenas selon la revendication 7,
**caractérisé en ce que** le moyen de blocage (37) est précontraint en direction d'une position de blocage.

9. Cadenas selon l'une des revendications 7 ou 8,
**caractérisé en ce que** le tronçon de commande (35) est formé par une surface oblique de l'arbre (29) qui coopère avec un tronçon de guidage forcé (51) du moyen de blocage (37).

10. Cadenas selon l'une des revendications précédentes,
**caractérisé en ce que** le moyen d'entraînement (39) est relié à un circuit de commande (41) au moyen duquel le moyen d'entraînement peut être piloté pour entraîner l'arbre (29) à chaque fois sur une rotation entière.

11. Cadenas selon l'une des revendications précédentes,
**caractérisé en ce qu'**il est prévu un récepteur radio ou un récepteur optique (45) pour recevoir un ordre de déverrouillage.

12. Cadenas selon l'une des revendications précédentes,
**caractérisé en ce que** le cadenas pour deux-roues est un cadenas de cadre, dans lequel l'arceau (11) est réalisé sous forme d'arceau rond.
